# EUROPÄISCHE PATENTSCHRIFT

(11) **EP 1 302 958 B1**
(45) Veröffentlichungstag und Bekanntmachung des Hinweises auf die Patenterteilung: **29.09.2010**
(21) Anmeldenummer: 02022808.6
(22) Anmeldetag: 11.10.2002
(51) Int. Cl.: H01H 33/34, F15B 13/042, F15B 13/04

(54) **Sitzventil für den Differentialzylinder eines elektrischen Trennschalters**
Seat valve for differential cylinder for electrical isolator switch
Soupape à siège pour vérin différentiel pour sectionneur

(30) Priorität: 15.10.2001 DE 20116920 U
(43) Veröffentlichungstag der Anmeldung: 16.04.2003
(73) Patentinhaber: HAWE Hydraulik SE, 81673 München (DE)
(72) Erfinder: Jemüller, Georg, 81825 München (DE); Heusser, Martin, Dipl.-Ing. Univ., 81245 München (DE)
(74) Vertreter: Grünecker, Kinkeldey, Stockmair & Schwanhäusser Anwaltssozietät

(56) Entgegenhaltungen:
- EP-A- 0 074 419
- EP-A- 0 373 598
- DE-A- 3 345 720
- FR-E- 53 004

## Beschreibung

Die Erfindung betrifft ein Sitzventil der im Oberbegriff des Anspruchs 1 angegebenen Art.

Bei dem gattungsgemäßen Sitzventil gemäß DE 33 45 720 A ist der Einschaltstellkrafterzeuger eine kolbenartige Verlängerung des Schieberschließelements, die in einem kleindurchmessrigen Abschnitt der verlängerten Gehäusebohrung abgedichtet geführt wird. Der Trennstellkrafterzeuger ist hingegen eine rohrartige Verlängerung des Schieberschließelements in einem Gehäusebohrungs-Verlängerungsabschnitt. Das Schieberschließelement ist sehr lang und bedingt eine große Baulänge des Sitzventils. Die Bohrungsabschnitte für die beiden Verlängerungen des Schieberschließelementes müssen außerordentlich präzise mit den Ventilsitzen fluchten, um das Schieberschließelement klemmkraftfrei und möglichst leichtgängig verstellen zu können. Solche Fluchtungen lassen sich allenfalls nur mit außerordentlich hohem Herstellungsaufwand erzielen, aus dem sehr hohe Herstellungskosten resultieren. Diese Fluchtungen sind ferner wegen des für die Montage des einteiligen Schieberschließelementes zweiteiligen Gehäuses in einer Bauserie kaum gleich gut zu erzielen bzw. sind nach längerer Standzeit der Sitzventile nicht mehr gegeben. Auch wegen der großen Baulänge wird bei jedem Schalttakt eine relativ große Ölmenge über weite Wege verdrängt, was die Schaltzeit unerwünscht verlängert. Bei elektrischen Trennschaltern wird jedoch für die Umschaltung in die Trennstellung eine Schaltzeit von nur wenigen Millisekunden vorgeschrieben. Da die präzisen Fluchtungen wegen produktionsbedingter Streuungen bzw. Toleranzen nicht zuverlässig gering zu erzielen sind, und Abweichungen den Verschiebewiderstand des Schieberschließelementes erhöhen, werden deshalb aus Sicherheitsgründen die zum Erzeugen der Stellkräfte beaufschlagten Druckflächen mit bestimmten gegenseitigen Verhältnissen und sehr groß ausgelegt, was die bei den Schalttakten bewegten Ölmengen weiter vergrößert. Beispielsweise muss beim Schalttakt (Trennstellung in Einschaltstellung) eine relativ große Ölmenge aus dem Trennstellkrafterzeuger zurück in den Pumpenanschluss und von diesem durch den zunächst noch stark drosselnden Pumpenventilsitz in den Zylinderanschluss gedrückt werden, was die Schaltzeit verlängert.

Bei dem aus EP 0 074 419 B bekannten Sitzventil sind das Gehäuse einteilig und das Schieberschließelement zweiteilig. Beide Ventilsitze sind gleich groß. Beide Stellkrafterzeuger weisen in Verlängerung des Schieberschließelementes vom Schieberschließelement getrennte, im Gehäuse verschiebbar geführte Kolben unterschiedlicher Größen auf. Die Kolben erzeugen zwar die Stellkraft für das Schieberschließelement querkraftfrei, so dass keine besonders präzisen Fluchtungen zwischen den Gehäusebohrungen der Kolben, den das Schieberschließelement führenden Gehäusebohrungsabschnitten, und den Ventilsitzen erforderlich sind. Jedoch bedingen in Verlängerung des Schieberschließelementes arbeitende Kolben eine unzweckmäßig große Baulänge des Sitzventils, ist die geteilte Bauweise des Schieberschließelementes herstellungstechnisch aufwendig, und werden bauartbedingt bei den Schalttakten relativ große Ölvolumina über weite Wege bewegt.

Aus FR 53004 E ist ein einfaches Schieberventil mit einem Schieberkolben bekannt, der ohne jegliche Sitzfunktion arbeitet. In dem Schieberventil werden einfache Richtungs-Umkehrbewegungen eingesteuert, bei denen es weder auf Präzision noch auf rasche Schaltzeiten ankommt. Das Schieberventil dient als Fluidverteiler für einen Steuermechanismus eines Getriebes. Der Schieberkolben enthält zwei Hilfskolben. Der Schieberkolben wird durch Steuerdruckbeaufschlagung auf jeweils eine Endseite zwischen linken und rechten Endstellungen umgeschaltet, wobei er die Druckbeaufschlagung zu jeweils einer Zylinderseite und die Druckentlastung der jeweils anderen Zylinderseite eines Steuerzylinders einstellt. Die Hilfskolben sind vorgesehen, um selbst nach Abbau des Steuerdrucks, der den Schieberkolben in eine Endstellung bringt, der Schieberkolben diese Endstellung beibehält und nicht durch den Druck zu den Zylinderseiten selbsttätig verstellt wird.

Bei einem aus EP 0 373 598 A bekannten Umschaltventil für einen Hydraulikantrieb ist ein Schieberkolben vorgesehen, der wahlweise mit einem von zwei sich gegenüberliegenden Hauptventilsitzen zusammenwirkt. Der Schieberkolben ist über eine kleindurchmessrige Verlängerung zusätzlich in einem Gehäusebohrungsabschnitt geführt. Ferner wird der Schieberkolben durch eine eingepasste Hülse verlängert, die mit einem im Durchmesser vergrößerten Führungsabschnitt in einem weiten Gehäusebohrungsabschnitt geführt wird.

Der Erfindung liegt die Aufgabe zugrunde, ein Sitzventil der eingangs genannten Art baulich einfach zu gestalten, das in Stellrichtung des Schieberschließelementes kompakt ist, über lange Standzeit mit kurzen Schaltzeiten einwandfrei funktioniert, und in dem bei jedem Schalttakt nur ein minimales Ölvolumen auf kurzen Wegen verlagert wird.

Die gestellte Aufgabe wird mit den Merkmalen des Anspruchs 1 gelöst.

Da der Kolben teleskopartig in einer Innenbohrung des Schieberschließelementes arbeitet, nutzt er einen Teil der Länge des Schieberschließelementes. Er benötigt keinen nennenswerten Überstand über das Schieberschließelement. Dadurch verringert sich die Baulänge des Sitzventils in Stellrichtung erheblich. Der Kolben erzeugt die Trenn-Stellkraft für das Schieberschließelement querkraftfrei, so dass bei der Verstellung keine den Bewegungswiderstand erhöhende Verklemmung des Schieberschließelement auftreten kann. Dieses sehr sichere Betriebsverhalten wird kostengünstig schon mit nur moderatem Herstellungsaufwand erzielt. Da die Sicherheit gleichbleibend geringer Stellkräfte für das Schieberschließelement unerwartet hoch ist, selbst über eine lange Standzeit bis beispielsweise 30 Jahre, können die haltenden Kräfte in beiden Endstellungen des Schieberschließelementes ebenfalls gering sein, d.h., es können die ersten und zweiten Druckflächen klein und in ihrem relativen Größenverhältnis und im Verhältnis zu den Druckflächen der Ventilsitze sehr günstig ("riskant") ausgelegt sein. Aus kleinen Druckflächen resultieren wiederum geringe, bei den Schalttakten auf kurzen Wegen bewegte Ölvolumina und kurze Schaltzeiten.

Zweckmäßig ist die Pumpensitzfläche größer als die Tanksitzfläche, während die erste Druckfläche kleiner ist als die zweite Druckfläche. Daraus resultieren für beide Schaltrichtungen kurze Schaltzeiten und minimale, zu bewegende Ölvolumina.

Die zweite Druckfläche braucht in etwa nur doppelt so groß zu sein wie die erste Druckfläche. Wegen der querkraftfreien gleichbleibenden Leichtgängigkeit des Schieberschließelementes und den gegenüber konventionellen Sitzventilen dieser Art auch ohne Risiko nur niedrigen Stellkräften reicht eine sehr kleine erste Druckfläche aus.

Daher braucht auch die zweite Druckfläche nicht sehr groß zu sein. Die zu bewegenden Ölvolumina bleiben minimal.

Die zweite Druckfläche kann nur um etwas mehr als 20 % größer sein als die Größendifferenz der beiden Ventilsitze. Daraus resultieren kurze Schaltzeiten des Trennschalters. Beispielsweise ist der Tankventilsitz um ca. 12 % kleiner als der Pumpenventilsitz.

Eine weitere Verkürzung der Baulänge lässt sich erzielen, wenn auch der Einschaltstellkrafterzeuger einen eigenen, verschiebbar geführten Kolben aufweist, der im Gehäuse für das Schieberschließelement querkraftfrei abstützbar ist. Dank der querkraftfrei vom Kolben auf das Schieberschließelement aufgebrachten Stellkraft kann das Schieberschließelement mit einer relativ kurzer Führungslänge im Gehäuse arbeiten. Dieser Längengewinn lässt sich zum Unterbringen des zweiten Kolbens nutzen, ohne die Baulänge zu vergrößern.

Wird der die zweite Druckfläche aufweisende Kolben in eine Innenbohrung des Schieberschließelements eingebracht, dann reduziert sich die Baulänge des Sitzventils sogar erheblich, da der Kolben in der eingefahrenen Stellung keinen Überstand benötigt. Allerdings sind zwei Dichtbereiche für das Schieberschließelement in der Gehäusebohrung erforderlich. Wird hingegen der die zweite Druckfläche definierende Kolben in eine Innenbohrung im Gehäuse eingesetzt, dann kommt das Schieberschließelement mit einer einzigen Abdichtung in der Gehäusebohrung aus, die der Leichtgängigkeit zugute kommt, so dass sehr niedrige Stellkräfte reichen.

Zweckmäßig ist am Kolben wenigstens eine Umfangsdichtung vorgesehen, die mit der Innenwand der Innenbohrung zusammenarbeitet und zwischen Stützringen positioniert ist.

Um vom Kolben erzeugte Querkräfte am Schieberschließelement mit Sicherheit auszuschließen, sollte der Kolben zumindest am das Gehäuse oder das Schieberschließelement beaufschlagenden Kolbenende konvex gerundet sein. Gegebenenfalls wird an diesem Kolbenende sogar ein Gleitschuh angeordnet.

Alternativ kann der Einschaltstellkrafterzeuger als zweite Druckfläche eine Ringfläche am Schieberschließelement benutzen. Die Ringfläche lässt sich ohne die Baulänge zu vergrößem im Führungsabschnitt des Schieberschließelements unterbringen.

Besonders zweckmäßig ist das Sitzventil eine in ein Außengehäuse eingesetzte Einschraubpatrone. Diese Bauweise ist kompakt, erleichtert die Montage, gewährt hohe Dichtigkeit und ermöglicht vor allem, nur in der Einschraubpatrone sehr hochwertiges Material, z.B. gehärteten Stahl, zu verwenden, das sich präzise bearbeiten lässt hilft die permanente Leichtgängigkeit des Schieberschließelementes zu gewährleisten. Das Außengehäuse kann hingegen aus einfacherem, auch kostengünstigerem Werkstoff bestehen.

Zweckmäßig weist die Einschraubpatrone zwei hintereinander gesetzte Stahlhülsen auf. Dies vereinfacht die Herstellung und die Montage. Jede Stahlhülse kann für sich präzise bearbeitet werden und aus hochwertigem Material bestehen, wobei z.B. die Führungsbereiche der Gehäusebohrung und die Ventilsitze gehärtet und geschliffen sind, um eine lange Standzeit zu erzielen, beispielsweise bis zu 30 Jahren.

Bei der Herstellung ist es zweckmäßig, das Gehäuse zweiteilig, hingegen das Schieberschließelement einteilig auszubilden.

Anhand der Zeichnung werden Ausführungsformen des Erfindungsgegenstandes erläutert. Es zeigen:
- Fig. 1: eine hydraulische Steuervorrichtung eines elektrischen Trennschalters, teils als Blockschaltbild, teils als Längsschnitt eines Sitzventils, wobei im Längsschnitt zwei unterschiedliche Schaltstellungen gezeigt sind,
- Fig. 2: einen Längsschnitt einer weiteren Ausführungsform des Sitzventils in zwei unterschiedlichen Schaltstellungen, und
- Fig. 3: eine Längsschnittansicht einer weiteren Ausführungsform, in zwei Schaltstellungen.

Eine elektrohydraulische Steuerschaltung ST für einen elektrischen Trennschalter TS, von der die Steuerschaltung als eine mögliche Ausführungsform von vielen nur schematisch angedeutet ist, steuert den Trennschalter TS innerhalb weniger Millisekunden zwischen der in ausgezogenen Linien gezeigten Trennstellung B und der gestrichelt angedeuteten Einschaltstellung A hin- und her. Gemäß einem Nebenaspekt wird die jeweilige Stellung A oder B bei Ausfall des elektrischen Teils der Steuerschaltung ST hydraulisch zu halten.

Der Trennschalter TS hat als Aktuator beispielsweise einen Differentialzylinder Z, dessen Differentialkolben K eine kolbenseitige Kammer 1 von einer kolbenstangenseitigen Kammer 2 trennt. Die Kolbenstange betätigt ein Trennelement 3 des Trennschalters TS. Herrschen in den Kammern 1, 2 zumindest in etwa gleiche Drücke, dann wird durch die Differentialwirkung der Trennschalter TS in die Einschaltstellung A gebracht. Wird die Kammer 1 entlastet, dann verstellt der Druck in der Kammer 2 den Trennschalter TS in die Trennstellung B.

Die Kammer 2 ist über eine Druckleitung 4 direkt mit einer Druckquelle P, beispielsweise einer Förderpumpe, verbunden. Von der Druckleitung 4 zweigt eine Druckleitung 4' zu einem Pumpenanschluss 5 in einem Gehäuse G eines Sitzventils V ab.

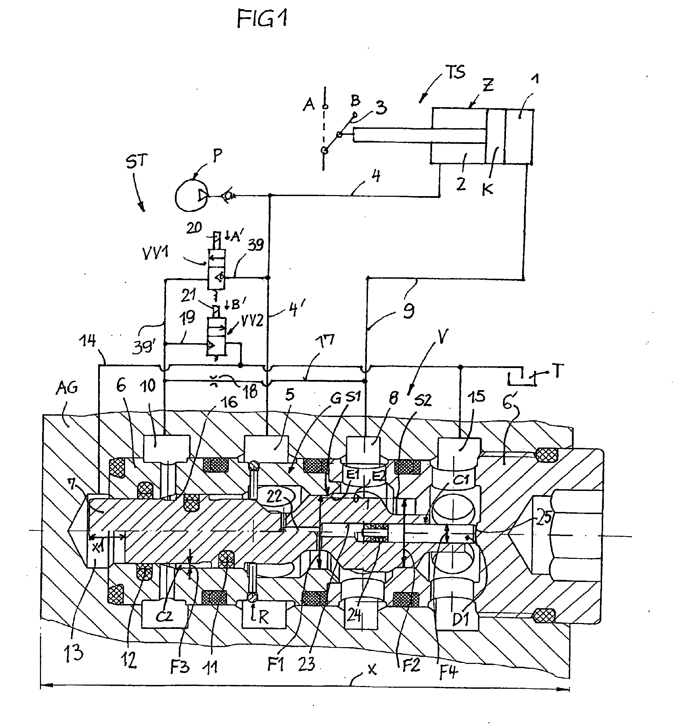

Das Sitzventil V besitzt in der Ausführungsform der Fig. 1 ein Außengehäuse AG, in das das Gehäuse G in Form beispielsweise zweier hintereinander geschalteter, z.B. zumindest zum Teil aus gehärtetem Stahl bestehender, Gehäuseteile 6, 6' eingesetzt, z.B. eingeschraubt, ist. Im Gehäuse G ist ein Schieberschließelement 7 zwischen zwei Endstellungen (obere Hälfte, linke Endstellung, untere Hälfte, rechte Endstellung) abgedichtet verschieblich. Angrenzend an den Pumpenanschluss 5, und im Gehäuse G durch einen Pumpenventilsitz S1 von diesem getrennt, ist im Gehäuse G ein Zylinderanschluss 8 vorgesehen, von dem eine Druckleitung 9 zur Kammer 1 führt. Von der Druckleitung 4' zweigt eine Druckleitung 39 ab, die über ein magnetbetätigtes Vorsteuerventil VV1 und eine weitere Druckleitung 39' zu einem Steueranschluss 10 führt, der ins Innere des Gehäuses G verlängert ist. In diesem Bereich befindet sich ein Führungsabschnitt des Schieberschließelementes 7, wobei zwei beabstandete Dichtungen 11 und 12 vorgesehen sind. Das freie, linksseitige Ende des Schieberschließelementes 7 ragt in eine Kammer 13, die über eine Leitung 14 mit einem Tank T verbunden ist. Der Zylinderanschluss 8 ist im Gehäuse G über einen Tankventilsitz S2 von einem Tankanschluss 15 getrennt, der mit der Tankleitung 14 verbunden ist. Am Schieberschließelement 7 sind im Bereich des Zylinderanschlusses 8 axial beabstandet eine Pumpensitzfläche E1 und eine Tanksitzfläche E2 geformt, die abwechselnd mit dem Pumpenventilsitz S1 oder dem Tankventilsitz S2 leckagefrei dicht zusammenarbeiten und in der Schließstellung jeweils mit einer Stellkraft gehalten werden.

Im Führungsabschnitt des Schieberschließelements 7 ist eine Ringschulter 16 geformt, die eine kreisringförmige zweite Druckfläche F3 definiert. Von der Druckleitung 39' zweigt ein Kanal 17 zur Druckleitung 9 ab. Im Kanal 17 ist eine Drossel 18 enthalten. Ferner zweigt von der Druckleitung 39' eine Entlastungsleitung 19 ab, die über ein zweites Vorsteuerventil W2 mit der Tankleitung 14 verbunden ist.

Die Vorsteuerventile VV1 und W2 werden durch Federn in den gezeigten Absperrstellungen gehalten und durch Schaltmagneten 20, 21 bei deren Bestromung mit einem Einschaltsignal A' bzw. einem Trennsignal B' abwechselnd auf Durchgang geschaltet.

Im Schieberschließelement 7 ist im Bereich des Pumpenanschlusses 5 ein Kanal 22 zu einer längsverlaufenden Innenbohrung 23 geformt. In der Innenbohrung 23 ist ein Kolben D1 mit einer zwischen Stützringen positionierten Umfangsdichtung 24 abgedichtet verschieblich, der eine erste Druckfläche F4 definiert. Der Kolben D1 ist an einer bei der Ausführungsform in Fig. 1 konvex gerundeten Stützfläche 25 im Gehäuse G bzw. dem Gehäuseteil 6' abstützbar und aktiver Teil eines Trennstellkrafterzeugers C1 des Sitzventils V.

Ferner ist in das Sitzventil S ein Einschaltstellkrafterzeuger C2 integriert, dessen aktive Komponente die Ringschulter 16 bzw. die zweite Druckfläche F3 ist. Der Pumpenventilsitz S1 definiert eine Druckfläche F1, während der Tankventilsitz S2 eine Druckfläche F2 definiert. Die Druckfläche F2 ist geringfügig kleiner als die Druckfläche F1, beispielsweise um ca. 12 %. Das Sitzventil hat eine Baulänge x von beispielsweise rund 120 mm, wobei das Schieberschließelement 7 einen Schalthub x1 von ca. 7,5 mm ausführt.

Ferner ist in das Sitzventil S, wie üblich, eine federbelastete mechanische Verrasteinrichtung R integriert, um die jeweilige Schalt-Endstellung sicherheitshalber kraftschlüssig zu fixieren.

### Funktion:

In der Darstellung in Fig. 1 ist die Steuerschaltung ST, unter der Voraussetzung dass die Druckquelle P fördert, stromlos. Die Vorsteuerventile VV1 und VV2 werden durch ihre Federn in den gezeigten Absperrstellungen gehalten. Der Steueranschluss 10 ist über die Entlastungsleitung 17 zur Druckleitung 9 entlastet, über die auch die Kammer 1 (durch den offenen Durchgangsspalt zwischen der Tanksitzfläche E2 und dem Tankventilsitz S2 und den Tankanschluss 15) druckentlastet ist. Dadurch wird die zweite Druckfläche F3 nicht oder nur mit dem Tankdruck in Richtung nach rechts beaufschlagt. Hingegen wirkt der Druck im Pumpenanschluss 5 auf den Kolben D1, der auf Anschlag an der Stützfläche 25 steht und die Trennstellkraft erzeugt, mit der das Schieberschließelement 7 (obere Hälfte in Fig. 1) nach links gedrückt gehalten wird, so dass die Pumpensitzfläche E1 am Pumpenventilsitz S1 anliegt. Der Trennschalter TS ist in seiner Trennstellung B.

Um den Trennschalter TS in seine Einschaltstellung A umzustellen, wird der Schaltmagnet 20 des ersten Vorsteuerventils VV1 bestromt, so dass der Steueranschluss 10 über die Druckleitungen 39, 39' mit dem Druck im Pumpenanschluss 5 beaufschlagt wird. Dieser Druck wirkt auf die zweite Druckfläche F3 des Schieberschließelementes 7 in Stellrichtung nach rechts und verstellt dieses über den Hubweg x1 in die in der unteren Hälfte von Fig. 1 gezeigte rechte Stellung, und zwar gegen die Trennstellkraft, die der Kolben D1 nach wie vor aufbringt. Die zweite Druckfläche F3 ist deutlich größer als die erste Druckfläche F4, z.B. ca. zwei- bis viermal so groß.

Die Pumpensitzfläche E1 wird schlagartig vom Pumpenventilsitz S1 abgehoben, bis die Tanksitzfläche E2 an dem Tankventilsitz S2 anliegt und leckagefrei absperrt. Dadurch werden der Pumpenanschluss 5 mit dem Zylinderanschluss 8 verbunden und die Kammer 1 über die Druckleitung 9 mit dem Druck im Druckanschluss beaufschlagt. Der Trennschalter TS wird in die Einschaltstellung A verstellt.

Sollte die Stromversorgung ausfallen, so dass der Schaltmagnet 20 wieder durch die Feder des ersten Vorsteuerventils VV1 zurückgestellt wird und das Ventil VV1 absperrt, dann wird die erreichte Endstellung hydraulisch gehalten, da der Steueranschluss 10 über die Leitung 17 und die Drossel 18 aus der Druckleitung 9 permanent mit Druck versorgt wird.

Ist der Trennschalter TS in die Trennstellung B zu schalten, dann werden der Schaltmagnet 20 ent- und der Schaltmagnet 21 erregt. Das zweite Vorsteuerventil W2 schaltet auf Durchgang. Der Steueranschluss 10 wird über die Entlastungsleitung 19 und die Tankleitung 14 zum Tank entlastet. Die zweite Druckfläche F3 wird entlastet, so dass die Trenn- Stellkraft des Kolbens D1 in der Innenbohrung 23 zur Wirkung kommt und das Schieberschließelement 7 in die in Fig. 1 oben gezeigte linke Stellung bringt und hält. Sollte der Strom ausfallen und das Vorsteuerventil W2 wieder absperren, bleibt die Trennstellkraft des Kolbens D1 weiterhin wirksam.

Die erste Druckfläche F4 ist ungefähr halb so groß wie die zweite Druckfläche F3. Die zweite Druckfläche F3 ist ungefähr doppelt so groß wie die Größendifferenz zwischen den Druckflächen F1 und F2. Die Größe der zweiten Druckfläche F3 könnte bis ca. zum Vierfachen der Größendifferenz F1 - F2 betragen.

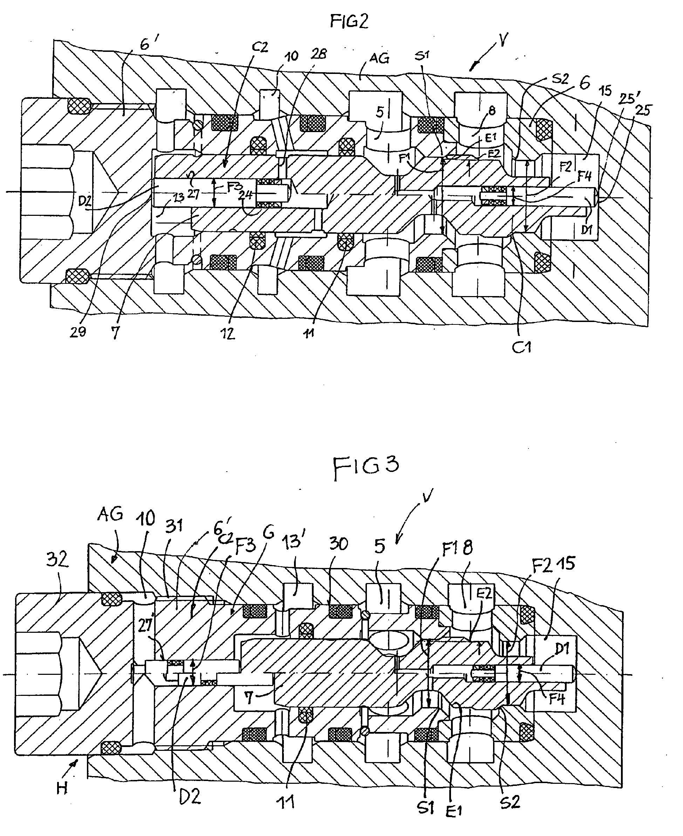

Die Ausführungsform des Sitzventils V in Fig. 2 unterscheidet sich von der der Fig. 1 durch eine andere Ausbildung des Einschaltstellkrafterzeugers C2. Der Führungsabschnitt des Schieberschließelementes 7 ist mit gleichbleibendem Durchmesser und ohne außenliegende Durchmesserschulter ausgebildet. In einer axialen Sack-Innenbohrung 27 des Schieberschließelementes 7 ist ein weiterer Kolben D2 abgedichtet verschieblich geführt, der die zweite Druckfläche F3 definiert, und in der an den Tank angeschlossenen Kammer 13 gegen einen Gehäuseanschlag 29 anlegbar ist, um für das Schieberschließelement 7 die Einschaltstellkraft in Fig. 2 nach rechts zu erzeugen. Die Innenbohrung 27 wird über eine Querverbindung 28 aus dem Steueranschluss 10 wahlweise mit dem Tank verbunden oder mit dem Druck im Pumpenanschluss 5 beaufschlagt. Beiderseits der Querverbindung vom Steueranschluss 10 in die Innenbohrung 27 sind beabstandete Dichtungen 11, 12 für das Schieberschließelement 7 vorgesehen. Die Endflächen der Kolben D1, D2 sind zweckmäßigerweise konvex gerundet, wie bei 25' angedeutet, um die Stellkraft ohne Querkraft für das Schieberschließelement 7 zu erzeugen.

Die Funktion des Sitzventils entspricht der anhand Fig. 1 erläuterten, wie auch die Struktur des Trennstellkrafterzeugers C1.

Die Ausführungsform des Sitzventils in Fig. 3 ist eine Modifikation der Ausführungsform von Fig. 2 mit kürzerem Schieberschließelement 7 und in den Gehäuseteil 6' eingegliedertem Einstellkrafterzeuger C2. Ferner ist der Steueranschluss 10 nach links versetzt, während die an den Tank T angeschlossene Kammer 13' hier näher beim Pumpenanschluss 5 liegt, so dass das linke Ende des Schieberschließelementes 7 druckentlastet ist.

Der Kolben D2, der die zweite Druckfläche F3 definiert, ist in einer axialen Durchgangsbohrung 27' des Gehäuseteils 6' abgedichtet verschieblich. Er wird über den Steueranschluss 10 mit dem Druck im Pumpenanschluss 5 beaufschlagt (untere Stellung in Fig. 3), um das Schieberschließelement 7 mit der Einschaltstellkraft entgegengesetzt zur vom Kolben D1 gleichzeitig aufgebrachten Trennstellkraft zu beaufschlagen.

Fig. 3 verdeutlicht, dass das Sitzventil V als Stahl-Einschraubpatrone H ausgebildet ist, wobei der Gehäuseteil 6' des Innengehäuses G gleichzeitig eine Einschraubkappe 32 definiert. Der Gehäuseteil 6' hat einen Außengewindeabschnitt, der in ein Innengewinde 31 einer Bohrung 30 im Außengehäuse AG eingeschraubt wird. Zweckmäßig ist die das Schieberschließelement 7 beaufschlagende Endfläche des Kolbens D2 konvex gerundet, um die Stellkraft querkraftfrei zu übertragen. Die Führungsbohrungsabschnitte im Gehäuse G und die Ventilsitze S1, S2 können gehärtet und geschliffen sein, wie auch die damit kooperierenden Teile des Schieberschließelements 7.

Die Maßnahme, die Druckfläche F2 des Tankventilsitzes S2 um beispielsweise ca. 12 % kleiner auszubilden als die Druckfläche F1 des Pumpenventilsitzes S1 ermöglicht optimal kurze Schaltzeiten und trägt dazu bei, beim Schalten nur minimale Ölvolumina zu verdrängen.

Die Steuerschaltung ST könnte anders als gezeigt ausgelegt sein, auch bezüglich der Auslegung und Anordnung der Vorsteuerventile VV1, VV2. Gegebenenfalls wird nur ein einziges Ventil benutzt.

## Patentansprüche

1. Sitzventil (S) für den Differentialzylinder (Z) eines elektrischen Trennschalters (TS), mit einem einen Pumpenventilsitz (S1) und einen Tankventilsitz (S2) aufweisenden Gehäuse (G) für ein Schieber-Schließelement (7), an dem zwischen den Ventilsitzen eine Pumpensitzfläche (E1) und eine Tanksitzfläche (E2) vorgesehen sind, wobei im Gehäuse (G) zwischen den Ventilsitzen ein Differentialzylinderanschluss (8), neben dem Pumpenventilsitz (S1) ein Pumpenanschluss (5) und neben dem Tankventilsitz (S2) ein Tankanschluss (15) angeordnet sind, mit einem Trennstellkrafterzeuger (C1) für das Schieberschließelement (7), der eine permanent vom Druck im Pumpenanschluss (5) beaufschlagte erste Druckfläche (F4) kleiner als jeder Ventilsitz (S1, S2) aufweist, mit der eine in Anlegerichtung der Pumpensitzfläche (E1) an den Pumpenventilsitz (S1) gerichtete Trennstellkraft erzeugbar ist, und mit einem Einschaltstellkrafterzeuger (C2), der eine wahlweise entlastbare oder mit dem Druck im Pumpenanschluss (5) beaufschlagbare zweite Druckfläche (F3) kleiner als jeder Ventilsitz (S1, S2) und verschieden von der ersten Druckfläche (F4) aufweist, mit der eine in Anlegerichtung der Tanksitzfläche (E2) an den Tankventilsitz (S2) gerichtete Einschaltstellkraft erzeugbar ist, **dadurch gekennzeichnet, dass** zumindest der Trennstellkrafterzeuger (C1) einen in einer mit dem Druck im Pumpenanschluss (5) beaufschlagten Innenbohrung (23) des Schieberschließelements (7) verschiebbar geführten Kolben (D1) aufweist, der im Gehäuse (G) und für das Schieberschließelement (7) querkraftfrei abstützbar ist.

2. Sitzventil nach Anspruch 1, **dadurch gekennzeichnet, dass** der Pumpenventilsitz (S1) größer ist als der Tankventilsitz (S2), und dass die erste Druckfläche (F4) kleiner ist als die zweite Druckfläche (F3).

3. Sitzventil nach Anspruch 1, **dadurch gekennzeichnet, dass** das Größenverhältnis zwischen der zweiten Druckfläche (F3) und der ersten Druckfläche (F4) größer als etwa 2 : 1 ist.

4. Sitzventil nach Anspruch 1, **dadurch gekennzeichnet, dass** die zweite Druckfläche (F3) größer ist als die Größendifferenz (F1 - F2) der beiden Ventilsitze (S1, S2), vorzugsweise um etwa 20 % bis 100 %.

5. Sitzventil nach Anspruch 1, **dadurch gekennzeichnet, dass** der Einschaltstellkrafterzeuger (C2) einen relativ zum Schieberschließelement (7) verschiebbaren Kolben (D2) aufweist, der im Gehäuse (G) und für das Schieberschließelement (7) querkraftfrei abstützbar ist.

6. Sitzventil nach Anspruch 5, **dadurch gekennzeichnet, dass** der Kolben (D2) entweder in einer Gehäuseinnenbohrung (27') oder in einer Innenbohrung (27) des Schieberschließelementes (7) angeordnet ist, die wahlweise mit dem Druck im Pumpenanschluss beaufschlagbar ist.

7. Sitzventil nach wenigstens einem der vorhergehenden Ansprüche, **dadurch gekennzeichnet, dass** der Kolben (D1, D2) wenigstens eine zwischen Stützringen angeordnete Umfangsdichtung (24) aufweist.

8. Sitzventil nach wenigstens einem der vorhergehenden Ansprüche, **dadurch gekennzeichnet, dass** der Kolben (D1, D2) an wenigstens einem das Gehäuse (G) oder das Schieberschließelement (7) beaufschlagenden Ende (25') konvex gerundet ist.

9. Sitzventil nach Anspruch 1, **dadurch gekennzeichnet, dass** die zweite Druckfläche (F3) des Einschaltstellkrafterzeugers (C2) eine Ringfläche (16) des Schieberschließelementes (7) ist.

10. Sitzventil nach wenigstens einem der vorhergehenden Ansprüche, **dadurch gekennzeichnet, dass** das Sitzventil (S) ein in ein Außengehäuse (AG) eingesetzte Einschraubpatrone (H) ist.

11. Sitzventil nach Anspruch 10, **dadurch gekennzeichnet, dass** die Einschraubpatrone (H) zwei hintereinander in eine Bohrung (30) des Außengehäuses (AG) eingesetzte Stahlhülsen (6', 6) aufweist.

12. Sitzventil nach wenigstens einem der vorhergehenden Ansprüche 1 bis 10, **dadurch gekennzeichnet, dass** das Gehäuse (G) zweigeteilt und das Schieberschließelement (7) einteilig sind.

## Claims

1. Seated-type valve (S) for an actuating differential cylinder (Z) of an electric disconnector (TS), comprising a housing (G) provided with a pump valve seat (S1) and a tank valve seat (S2), said housing (G) containing a slider closure element (7) defining a pump seat surface (E1) and a tank seat surface (E2) at locations between the pump valve seat (S1) and the tank valve seat (S2) of said housing (G), a differential cylinder port (8) located in said housing (G) between the pump valve seat (S1) and the tank valve seat (S2), a housing pump port (5) at a side of said pump valve seat (S1) and a housing tank port (15) at a side of said tank valve seat (S2), a separation actuation force generator (C1) for the slider closure element (7) which separation actuation force generator (C1) has a first pressure actuated area (F4) of smaller size than each valve seat (S1, S2) which said first pressure actuated area (F4) is permanently actuated by pressure in said housing pump port (5) generating a separation actuation force oriented in a direction in which said pump seat surface (E1) abuts at said pump valve seat (S1), and a switch-on actuator force generator (C2) provided with a second pressure actuated area (F3) of smaller size than each valve seat (S1, S2) and of different size than the size of said first pressure actuated area (F4) which second pressure actuated area (F3) selectively either is relieved from or is actuated by said pressure in said housing pump port (5) for generating a switch-on actuation force oriented in a direction in which the tank seat surface (E2) abuts at said tank valve seat (S2), **characterised in that** at least said separation actuation force generator (C1) comprises a piston (D1) which is slidably guided in an interior bore (23) of said slider closure element (7), that said interior bore (23) is actuable by said pressure in said housing pump port (5), and that the piston (D1) is designed for a mechanical co-action with said housing (G) without creating hindering lateral forces for the slider closure element (7).

2. Seated-type valve as in claim 1, **characterised in that** the pump valve seat (S1) is larger than the tank valve seat (S2), and that the first pressure actuated area (F4) is smaller than the second pressure actuated area (F3).

3. Seated-type valve as in claim 1, **characterised in that** the dimensional relationship between the second pressure actuated area (F3) and the first pressure actuated area (F4) is larger than about 2:1.

4. Seated-type valve as in claim 1, **characterised in that** the second pressure actuated area (F3) is larger than the dimensional difference (F1-F2) of both valve seats (S1, S2), preferably larger by about 20% to 100%.

5. Seated-type valve as in claim 1, **characterised in that** the switch-on actuator force generator (C2) comprises a piston (D2) which is slidably guided in relation to the slider closure element (7), and that the piston (D2) is designed for a mechanical co-action with said housing G) without creating hindering lateral forces for said slider closure element (7).

6. Seated-type valve as in claim 5, **characterised in that** the piston (D2) either is provided in an interior bore (27") of the housing or in an interior bore (27) of the slider closure element (7), and that the bore (27" or 27) selectively is actuated by the pressure in the housing pump port (5).

7. Seated-type valve as in at least one of the preceding claims, **characterised in that** the piston (D1, D2) is provided with at least one circumferential sealing (24) arranged between two supporting rings.

8. Seated-type valve as in at least one of the preceding claims, **characterised in that** at least one end (25') of the piston (D1, D2), by which end the piston (D1, D2) when pressure actuated abuts in said housing (G) or at said slider closure element (7), is rounded convexly.

9. Seated-type valve as in claim 1, **characterised in that** the second pressure actuated area (F3) of said switch-on actuation force generator (C2) is defined by an annular surface (16) of said closure element (7).

10. Seated-type valve as in at least one of the preceding claims, **characterised in that** the seated-type valve (S) is constituted by a screw-in cartridge (H) inserted into an outer housing (AG).

11. Seated-type valve as in claim 10, **characterised in that** the screw-in cartridge (H) comprises two steel sleeves (6', 6) inserted behind each other into a bore (30) of the outer housing (AG).

12. Seated-type valve as in at least one of the preceding claims 1 to 10, **characterised in that** the housing (G) is divided into two parts, and that the slider closure element (7) is a one piece part.

## Revendications

1. Soupape à siège (V) pour le vérin différentiel (Z) d'un sectionneur électrique (TS), comprenant un boitier (G), présentant un siège de soupape de pompe (S1) et un siège de soupape de réservoir (S2), pour un élément de fermeture à tiroir (7), sur lequel sont prévues entre les sièges de soupapes une surface de siège de pompe (E1) et une surface de siège de réservoir (E2), un raccord de vérin différentiel (8) étant disposé dans le boitier (G) entre les sièges de soupapes, un raccord de pompe (5) étant disposé à côté du siège de soupape de pompe (S1) et un raccord de réservoir (15) étant disposé à côté du siège de soupape de réservoir (S2), avec un générateur de force de sectionnement (C1) pour l'élément de fermeture à tiroir (7), qui présente une première surface de pression (F4), sollicitée en permanence par la pression dans le raccord de pompe (5), plus petite que chaque siège de soupape (S1, S2), par laquelle peut être générée une force de sectionnement dirigée dans la direction d'application de la surface de siège de soupape (E1) sur le siège de soupape de pompe (S1), et comprenant un générateur de force de mise en circuit (C2), qui présente une seconde surface de pression (F3) pouvant être sélectivement détendue ou sollicitée par la pression dans le raccord de pompe (5), plus petite que chaque siège de soupape (S1, S2) et différente de la première surface de pression (F4), par laquelle peut être générée une force de mise en circuit dirigée dans la direction d'application de la surface de siège de réservoir (E2) sur le siège de soupape de réservoir (S2), **caractérisée en ce qu'**au moins le générateur de force de sectionnement (C1) présente un piston (D1) guidé mobile dans un taraudage (23), sollicité par la pression dans le raccord de pompe (5), de l'élément de fermeture à tiroir (7), qui peut s'appuyer dans le boitier (G) et sans force transversale pour l'élément de fermeture à tiroir (7).

2. Soupape à siège suivant la revendication 1, **caractérisée en ce que** le siège de soupape de pompe (S1) est plus grand que le siège de soupape de réservoir (S2), et que la première surface de pression (F4) est plus petite que la seconde surface de pression (F3).

3. Soupape à siège suivant la revendication 1, **caractérisée en ce que** le rapport de grandeurs entre la seconde surface de pression (F3) et la première surface de pression (F4) est supérieur à environ 2 : 1.

4. Soupape à siège suivant la revendication 1, **caractérisée en ce que** la seconde surface de pression (F3) est plus grande que la différence de grandeurs (F1 - F2) des deux sièges de soupapes (S1, S2), de préférence d'environ 20% à 100%.

5. Soupape à siège suivant la revendication 1, **caractérisée en ce que** le générateur de force de mise en circuit (C2) présente un piston (D2) mobile par rapport à l'élément de fermeture à tiroir (7), qui peut s'appuyer dans le boitier (G) et sans force transversale pour l'élément de fermeture à tiroir (7).

6. Soupape à siège suivant la revendication 5, **caractérisée en ce que** le piston (D2) est disposé soit dans un taraudage de boitier (27') soit dans un taraudage (27) de l'élément de fermeture à tiroir (7), lequel taraudage peut être sollicité sélectivement par la pression dans le raccord de pompe.

7. Soupape à siège suivant l'une au moins des revendications précédentes, **caractérisée en ce que** le piston (D1, D2) présente au moins un joint circonférentiel (24) disposé entre des bagues d'appui.

8. Soupape à siège suivant l'une au moins des revendications précédentes, **caractérisée en ce que** le piston (D1, D2) a un arrondi convexe sur au moins une extrémité (25') sollicitant le boitier (G) ou l'élément de fermeture à tiroir (7).

9. Soupape à siège suivant la revendication 1, **caractérisée en ce que** la seconde surface de pression (F3) du générateur de force de mise en circuit (C2) est une surface annulaire (16) de l'élément de fermeture à tiroir (7).

10. Soupape à siège suivant l'une au moins des revendications précédentes, **caractérisée en ce que** la soupape à siège (V) est une cartouche filetée (H) logée dans un boitier extérieur (AG).

11. Soupape à siège suivant la revendication 10, **caractérisée en ce que** la cartouche filetée (H) présente deux douilles d'acier (6', 6) logées l'une derrière l'autre dans un alésage (30) du boitier extérieur (AG).

12. Soupape à siège suivant l'une au moins des revendications précédentes 1 à 10, **caractérisée en ce que** le boitier (G) est en deux parties et l'élément de fermeture à tiroir (7) en une partie.
